# EUROPEAN PATENT APPLICATION

(11) **EP 1 770 578 A2**
(43) Date of publication of application: **04.04.2007**
(21) Application number: 06019333.1
(22) Date of filing: 15.09.2006
(51) Int. Cl.: G06F 21/00

(54) **Secure recoverable passwords**

(30) Priority: 29.09.2005 US 238860
(71) Applicant: AVAYA TECHNOLOGY LLC, New Jersey, DE 07920-2332 (US)
(72) Inventor: Fazal, Lookman, Y., Franklin Park, New Jersey 08823 (US); O'Gorman, Lawrence, Madison, New Jersey 07940 (US); Bagga, Amit, Piscataway , New Jersey 08854 (US)
(74) Representative: Blumbach - Zinngrebe

(57) **Abstract**

A method and apparatus are disclosed that enable a user who forgets one of his two passwords to securely recover the forgotten password. After a user logs in using one of his two passwords, the illustrative embodiment reveals the other password to the user. The passwords are stored in a persistent table in both hashed and encrypted forms, but not in their original forms. The illustrative embodiment is advantageous over the prior art, where forgotten passwords are reset to a default value, in two ways. First, it avoids the inconvenience of a user having to log in using the default password, think up a new string that would make a good password, and change the password from the default to the new string. Second, it avoids the use of default-value passwords that might compromise security.

## Description

### Field of the Invention

The present invention relates to computer security in general, and, more particularly, to a secure method of storing recoverable passwords.

### Background of the Invention

Many operating systems enable a *system administrator* (or *superuser*) to create a plurality of *user accounts* on a computer. Each user account typically has an associated identifier called a *username,* and a *password* that must be provided in combination with the username to *log in* to the computer with that account.

A computer operating system typically maintains a *password table* in persistent storage (*e.g.*, in a disk file, in a directory, *etc.*) and consults the password table when a user attempts to log in to the computer. Because a malicious user (which could be a user with an account on the computer, or an external "cracker") might attempt to access the password table to get another user's password, *hashed passwords* are typically stored in the password table instead of the actual passwords. A hashed password is the value that is obtained when a *cryptographic hash function* is applied to a password. A cryptographic hash function is a function *h* that converts a first string (*e.g.,* a password, *etc.*) to a second string (*e.g.*, a hashed password, *etc.*), and exhibits the following three properties:
(1)preimage resistance: given a hashed password, it should be hard to find the original unhashed password (*i.e.*, given hashed password *z* it should be hard to find *y* such that *z* = *h*(*y*))
(2) second preimage resistance: given a first password *y₁,* it should be hard to find a second password *y₂* (different than *y₁*) such that *h*(*y₁*) *= h*(*y₂*)
(3) collision resistance: it should be hard to find two different passwords *y₁* and *y₂* such that *h*(*y₁*) = *h*(*y₂*)
Thus, even if a malicious user is able to access a computer's password table and get another user's hashed password, it is extremely difficult for the malicious user to determine the original unhashed password from the hashed password.

In some operating systems a user account might have two passwords, where the user can log in by providing either of the passwords with his or her username.
Typically when a user forgets his "primary" password, he logs in with his "secondary" password, and the primary password is reset to a default string (*e.g.,* "john123", "password", *etc.*). The user can then log in using the default string and change the primary password accordingly. (Because the password table stores only hashed passwords for security purposes, the unhashed primary password cannot be simply revealed to the user.) In some systems the secondary password might be a particular piece of information that presumably is not known to other users (*e.g.*, mother's maiden name, birthplace, telephone number at a previous residence, *etc.*), while in some other systems the secondary password is, like the primary password, an arbitrarily-selected string.

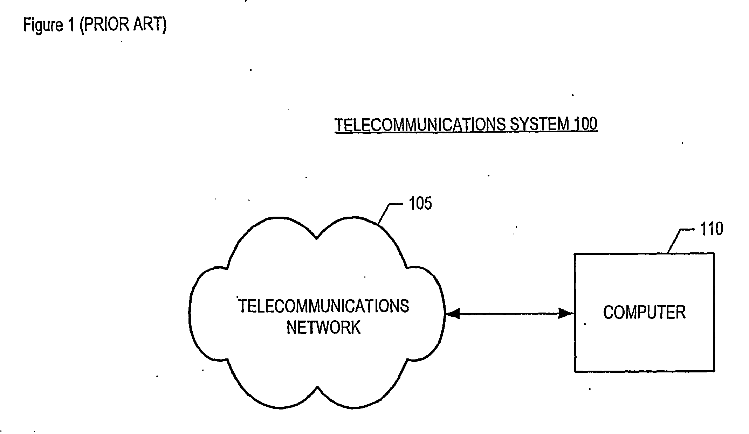

Figure 1 depicts telecommunications system 100 in accordance with the prior art. Telecommunications system 100 comprises telecommunications network 105 and computer 110, interconnected as shown.

Telecommunications network 105 is a network such as the Public Switched Telephone Network [PSTN], the Internet, etc. that transports messages between computer 110 and other devices (*e.g.*, desktop computers, notebook computers, servers, wireless telecommunications terminals, *etc.*).

Computer 110 is a desktop computer, notebook computer, server, etc. whose operating system is capable of providing one or more user accounts. A user who has an account on computer 110 can log in to the computer via an input device (*e.g.*, keyboard, *etc.*), or from a remote computer via telecommunications network 105. A user must provide a valid username/password combination in order to log in to computer 110.

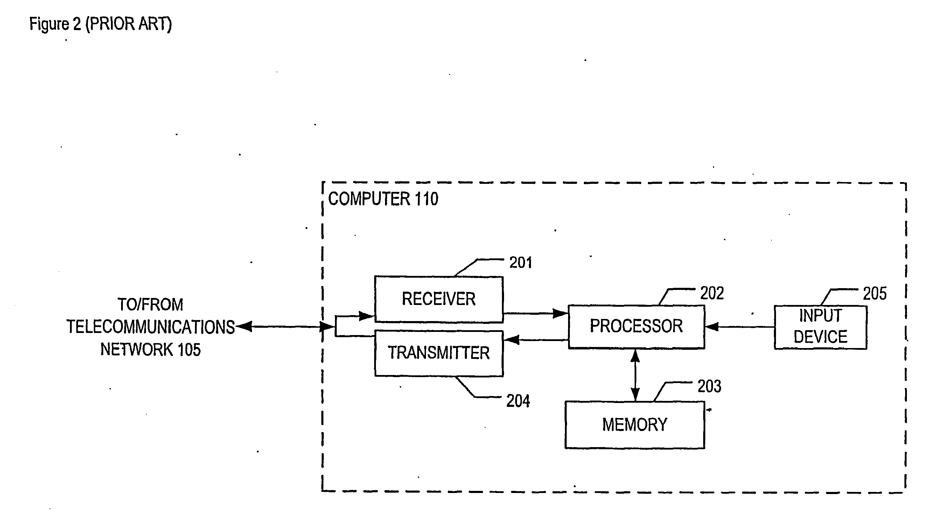

Figure 2 depicts the salient components of computer 110 in accordance with the prior art. Computer 110 comprises receiver 201, processor 202, memory 203, transmitter 204, and input device 205, interconnected as shown.

Receiver 201 receives signals from clients (*e.g.*, desktop computers, notebook computers, *etc.*) via telecommunications network 105 and forwards the information encoded in the signals to processor 202.

Processor 202 is a general-purpose processor that is capable of receiving information from receiver 201, of executing instructions stored in memory 203, of reading data from and writing data into memory 203, and of transmitting information to transmitter 204.

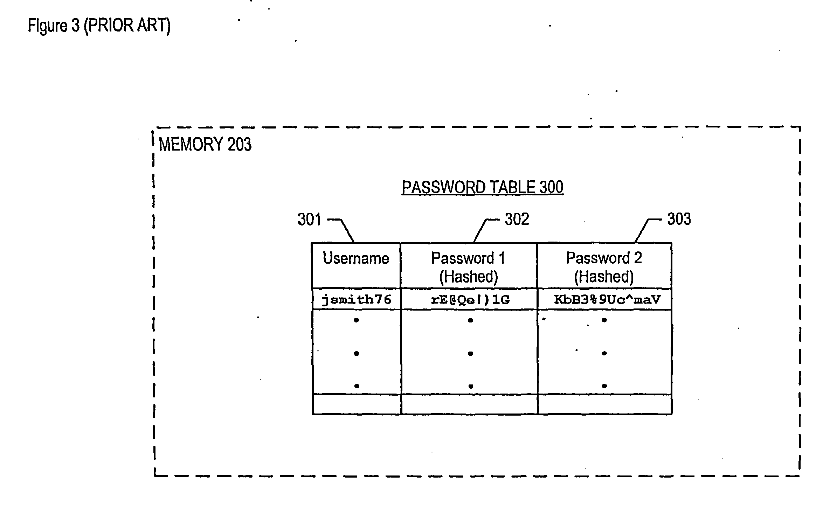

Memory 203 is capable of storing data, including a password table that is described below and with respect to Figure 3, and of storing executable instructions. Memory 203 might be any combination of random-access memory (RAM), flash memory, disk drive memory, etc.

Transmitter 204 receives information from processor 202 and transmits signals that encode this information to clients (*e.g.,* desktop computers, notebook computers, *etc.*) via telecommunications network 105.

Input device 205 is a keyboard, mouse, microphone, etc. that receives input from a user (*e.g.*, username, password, *etc.*) and transmits signals that represent the input to processor 202.

Figure 3 depicts password table 300, stored in memory 203, in accordance with the prior art. Password table 300 comprises three columns and one or more rows, where each row corresponds to a user account of computer 110. Column 301 stores the username for each user account, column 302 stores a hashed first password (*i.e.*, the value of a cryptographic hash function applied to a first password) for each user account, and column 303 stores a hashed second password for each user account.

### Summary of the Invention

The present invention enables a user who forgets one of his two passwords to securely recover the forgotten password. In particular, after a user logs in using one of his two passwords, the illustrative embodiment reveals the other password to the user, without either of the two original unhashed passwords being saved in persistent storage (*e.g.*, in a disk file, in an LDAP directory, *etc.*). The illustrative embodiment thus overcomes two major disadvantages of the prior art:
(i)the inconvenience of a user having to
   - log in using the default password,
   - think up a new string that would make a good password, and
   - change the password from the default to the new string; and
(ii) compromised security due to the resetting of passwords to default values (particularly when a user does not change the default password immediately).

The illustrative embodiment of the present invention employs a password table that adds two columns to password table 300 of the prior art. The first additional column stores an encrypted version *p'* of a user's first password p, where the encryption key is based on:
(i) a datum *d* (*e.g.,* string, number, *etc.*) that
   · is accessible to the system (*e.g.*, stored on a local disk, stored at a networked file server, *etc.*), and
   · is unknown to the user; and
(ii) the user's second password *q*
such that *p'* can be decrypted when (i) and (ii) above are known. Similarly, the second additional column stores an encrypted version *q'* of the user's second password *q*, where the encryption key is based on datum *d* and first password *p*, such that *q'* can be decrypted when *d* and *p* are known.

In accordance with the illustrative embodiment, when a user attempts to log in by providing (1) a username and (2) an input *x* for matching one of the username's passwords (say *p*), input *x* is hashed and compared with corresponding hashed password *h*(*p*) in the password table. If *h(x)* matches *h(p)*, then the user is logged in, input *x* (which with very high probability equals password *p*) and datum *d* are used to decrypt *q'*, and the result, *q*, is revealed to the user. Similarly, if *h*(*x*) matches *h*(*q*), then the user is logged in, input *x* (which with very high probability equals password *q*) and datum *d* are used to decrypt *p'*, and the result, *p*, is revealed to the user.

The illustrative embodiment comprises: a first memory location that stores the value of a cryptographic hash function applied to a first datum, and a second memory location that stores an encrypted version of said first datum.

### Brief Description of the Drawings

Figure 1 depicts a telecommunications system in accordance with the prior art.
Figure 2 depicts the salient components of computer 110, as shown in Figure 1, in accordance with the prior art.
Figure 3 depicts a password table that is stored in memory 203, as shown in Figure 2, in accordance with the prior art.
Figure 4 depicts a telecommunications system in accordance with the illustrative embodiment of the present invention.
Figure 5 depicts the salient components of computer 410, as shown in Figure 4, in accordance with the illustrative embodiment of the present invention.
Figure 6 depicts a password table that is stored in memory 503, as shown in Figure 5, in accordance with the illustrative embodiment of the present invention.
Figure 7 depicts a flowchart of the salient tasks of computer 410, in accordance with the illustrative embodiment of the present invention.

### Detailed Description

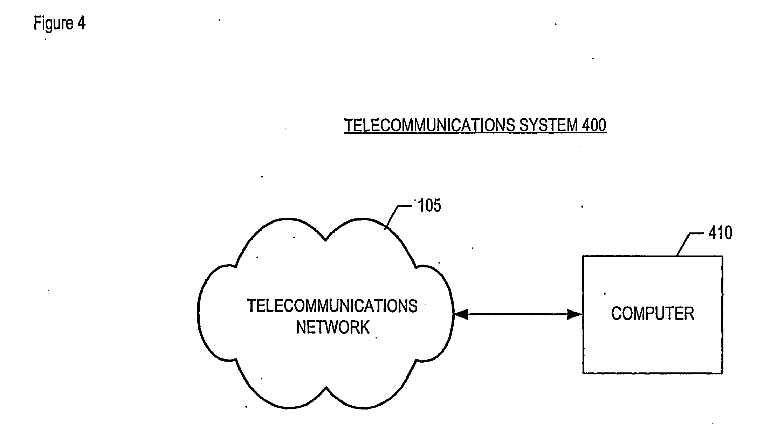

Figure 4 depicts telecommunications system 400 in accordance with the illustrative embodiment of the present invention. Telecommunications system 400 comprises telecommunications network 105 and computer 410, interconnected as shown.

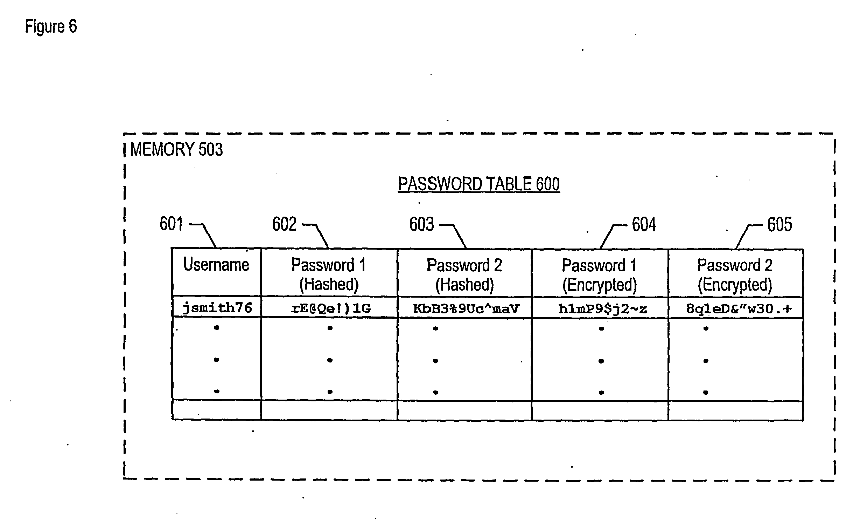

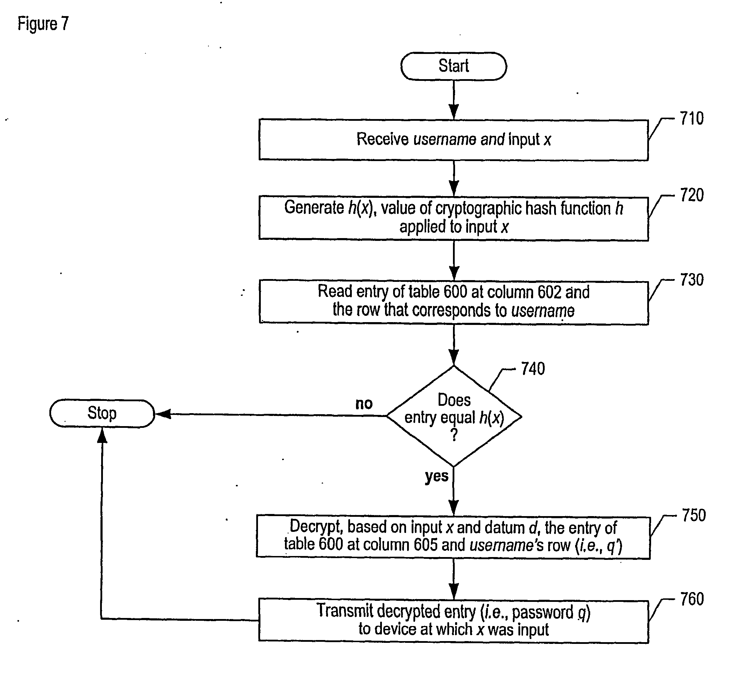

Computer 410 is a computer that enables users to log in from remote clients and securely recover their passwords, as described below and with respect to Figures 6 and 7.

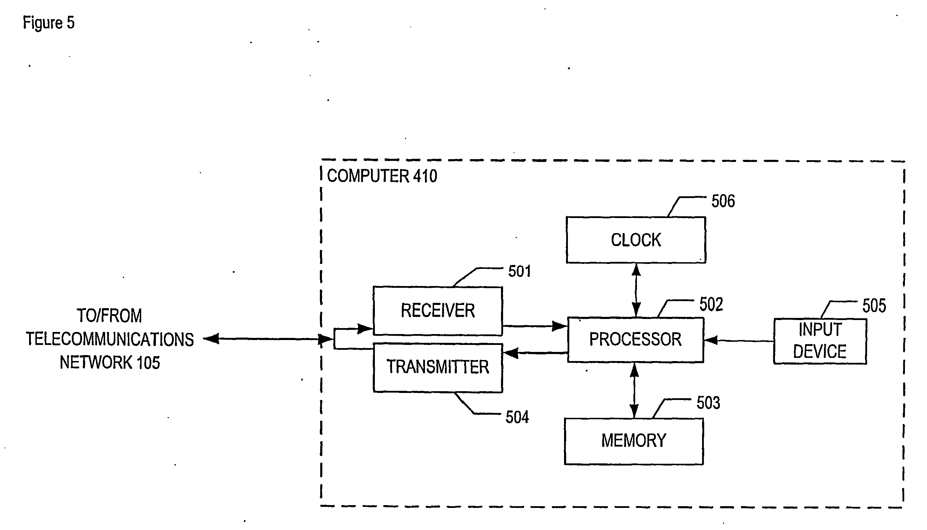

Figure 5 depicts the salient components of computer 410 in accordance with the illustrative embodiment of the present invention. Computer 410 comprises receiver 501, processor 502, memory 503, transmitter 504, input device 505, and clock 506, interconnected as shown.

Receiver 501 receives signals from clients (*e.g.*, desktop computers, notebook computers, *etc.*) via telecommunications network 105 and forwards the information encoded in the signals to processor 502, in well-known fashion. It will be clear to those skilled in the art, after reading this specification, how to make and use receiver 501.

Processor 502 is a general-purpose processor that is capable of receiving information from receiver 501 and input device 505, of executing instructions stored in memory 503, of reading data from and writing data into memory 503, of executing the tasks described below and with respect to Figure 7, and of transmitting information to transmitter 504. In some alternative embodiments of the present invention, processor 502 might be a special-purpose processor. In either case, it will be clear to those skilled in the art, after reading this specification, how to make and use processor 502.

Memory 503 stores data, including a password table as described below and with respect to Figure 6, and executable instructions, as is well-known in the art. Memory 503 might be any combination of random-access memory (RAM), flash memory, disk drive memory, *etc.*, and it will be clear to those skilled in the art, after reading this specification, how to make and use memory 503.

Transmitter 504 receives information from processor 502 and transmits signals that encode this information to clients (*e.g.*, desktop computers, notebook computers, *etc.*) via telecommunications network 105, in well-known fashion. It will be clear to those skilled in the art, after reading this specification, how to make and use transmitter 504.

Input device 505 is a keyboard, mouse, microphone, etc. that receives input from a user (*e.g.*, username, password, *etc.*) and transmits signals that represent the input to processor 502, in well-known fashion.

Clock 506 transmits the current time and date to processor 502 in well-known fashion.

Figure 6 depicts password table 600, stored in memory 503, in accordance with the illustrative embodiment of the present invention. Password table 600 comprises six columns and one or more rows, where each row corresponds to a user account of computer 410. Column 601, like column 301 of password table 300, stores the username for each user account; column 602, like column 302 of password table 300, stores a hashed first password for each user account; and column 603, like column 303 of password table 300, stores a hashed second password for each user account.

Column 604 stores an encrypted version *p'* of each user's first password *p*, where the encryption key is based on (i) a datum d that is accessible to computer 410 but is unknown to the user, and (ii) the user's second password *q,* such that *p'* can be decrypted when both (i) and (ii) above are known. By encrypting first password *p* in this fashion, neither the system administrator of computer 410, nor a cracker who gains access to computer 410, can (easily) decrypt the values in column 604 and obtain a user's first password. The reason for this is that the users' second passwords are stored on computer 410 only in hashed and encrypted forms, and the value of datum *d* alone (if discovered by the system administrator or cracker) is insufficient for decrypting *p'*.

Column 605 stores an encrypted version *q'* of each user's second password *q*, where the encryption key is based on datum d and first password *p.* For the same reason as above, encrypting second password *q* in this fashion prevents a malicious user from (easily) decrypting *q',* even if the malicious user has discovered the value of datum *d.*

Figure 7 depicts a flowchart of the salient tasks of computer 410, in accordance with the illustrative embodiment of the present invention. It will be clear to those skilled in the art which tasks depicted in Figure 7 can be performed simultaneously or in a different order than that depicted.

At task 710, computer 410 receives a username, and an input x that is for matching first password *p.*

At task 720, computer 410 generates *h(x),* the value of cryptographic hash function *h* applied to input *x.*

At task 730, computer 410 reads the value of the entry of table 600 at column 602 and the row that corresponds to *username.*

At task 740, computer 410 checks whether the entry value equals *h(x).* If so, execution continues at task 750, otherwise the method of Figure 7 terminates.

At task 750, computer 410 decrypts, based on input *x* and datum *d,* the entry of table 600 at column 605 and *username's* row (*i.e., q').*

At task 760, computer 410 transmits the decrypted entry *(i.e.,* password *q)* to the device at which *x* was input. After task 760, the method of Figure 7 terminates.

Although the illustrative embodiment is disclosed in the context of passwords for an operating system, it will be clear to those skilled in the art how to make and use embodiments of the present invention for other kinds of passwords *(e.g.,* for access to websites, applications, databases, *etc.)* Similarly, although the illustrative embodiment is disclosed in the context of two-password user accounts, it will be clear to those skilled in the art how to make and use embodiments of the present invention for user accounts that have three or more passwords.

It is to be understood that the above-described embodiments are merely illustrative of the present invention and that many variations of the above-described embodiments can be devised by those skilled in the art without departing from the scope of the invention. For example, in this Specification, numerous specific details are provided in order to provide a thorough description and understanding of the illustrative embodiments of the present invention. Those skilled in the art will recognize, however, that the invention can be practiced without one or more of those details, or with other methods, materials, components, etc.

Furthermore, in some instances, well-known structures, materials, or operations are not shown or described in detail to avoid obscuring aspects of the illustrative embodiments. It is understood that the various embodiments shown in the Figures are illustrative, and are not necessarily drawn to scale. Reference throughout the specification to "one embodiment" or "an embodiment" or "some embodiments" means that a particular feature, structure, material, or characteristic described in connection with the embodiment(s) is included in at least one embodiment of the present invention, but not necessarily all embodiments. Consequently, the appearances of the phrase "in one embodiment," "in an embodiment," or "in some embodiments" in various places throughout the Specification are not necessarily all referring to the same embodiment. Furthermore, the particular features, structures, materials, or characteristics can be combined in any suitable manner in one or more embodiments. It is therefore intended that such variations be included within the scope of the following claims and their equivalents.

## Claims

1. An apparatus comprising:
a first memory location that stores the value of a cryptographic hash function applied to a first datum, and
a second memory location that stores an encrypted version of said first datum.

2. The apparatus of claim 1 wherein said first datum is a password for accessing a system that comprises one or both of (i) a processor and (ii) a memory.

3. The apparatus of claim 2 wherein said encrypted version of said first datum is based on a second datum that is inaccessible to said system.

4. The apparatus of claim 3 wherein said second datum is a second password.

5. The apparatus of claim 4 wherein said first password and said second password are associated with a user of said system.

6. The apparatus of claim 5 wherein said encrypted version of said first datum is also based on a third datum that is accessible to said system and is unknown to said user.

7. The apparatus of claim 6 further comprising:
a third memory location that stores an encrypted version of said second datum.

8. The apparatus of claim 7 wherein said encrypted version of said second datum is based on said first datum and said third datum.

9. The apparatus of claim 6 further comprising:
a third memory location that stores the value of a second cryptographic hash function applied to said second datum.

10. The apparatus of claim 9 wherein said first cryptographic hash function and said second cryptographic hash function are the same.

11. A method comprising:
generating the value of a cryptographic hash function applied to a datum, and
generating an encrypted version of said datum.

12. The method of claim 11 further comprising at least one of:
storing said value in a first memory location, and
storing said encrypted version in a second memory location.

13. The method of claim 12 wherein said first memory location and said second memory location share a common address space.

14. The method of claim 11 wherein said datum is a password.

15. A method comprising:
(a) receiving at a data-processing system an input *x* from a user, wherein said user has a first password *p* and a second password *q,* and wherein said first password *p* is inaccessible to said data-processing system, and wherein said data-processing system has access to:
(i) *h(p),* the value of a cryptographic hash function *h* applied to said first password *p,* and
(ii) an encrypted version *q'* of said second password *q,* wherein the encryption is based on a combination of
(1) said first password *p,* and
(2) a datum *d* that is accessible to said data-processing system and is unknown to said user;
(b) generating *h(x),* the value of said cryptographic hash function *h* applied to said input *x;* and
(c) when *h(x)* equals *h(p),* decrypting said encrypted version *q'* to get said second password *q,* wherein the decrypting is based on said input *x* and said datum *d.*

16. The method of claim 15 wherein said data-processing system writes said first password *p* to volatile memory only.

17. The method of claim 15 wherein said data-processing system writes said second password *q* to volatile memory only.

18. The method of claim 15 wherein said data-processing system has access to an encrypted version *p'* of said second password *p.*

19. The method of claim 18 wherein said encrypted version *p'* is based on said second password *q* and said datum *d.*

20. The method of claim 15 wherein said data-processing system has access to *g*(*q*), the value of a cryptographic hash function *g* applied to said second password *q.*
